# EUROPÄISCHE PATENTSCHRIFT

(11) **EP 1 679 335 B1**
(45) Veröffentlichungstag und Bekanntmachung des Hinweises auf die Patenterteilung: **23.09.2009**
(21) Anmeldenummer: 05027840.7
(22) Anmeldetag: 20.12.2005
(51) Int. Cl.: C08G 77/38, C08G 77/06, C08G 77/12, C08G 77/46, B01F 17/00

(54) **Siloxanblockcopolymere**
Siloxane block-copolymers
Bloc-copolymères de siloxane

(30) Priorität: 07.01.2005 DE 102005001041
(43) Veröffentlichungstag der Anmeldung: 12.07.2006
(73) Patentinhaber: Evonik Goldschmidt GmbH, 45127 Essen (DE)
(72) Erfinder: Ferenz, Michael, Dr., 45147 Essen (DE)

(56) Entgegenhaltungen:
- EP-A1- 0 867 462
- EP-A2- 0 298 402
- EP-A2- 0 381 318
- US-A- 5 136 068

## Beschreibung

Die Erfindung betrifft neue Siloxanderivate und deren Verwendung.

Organomodifizierte Siloxane werden in einer Vielzahl von Applikationen eingesetzt. Dies ist möglich, da sich die Eigenschaften des Siloxans gezielt über verschiedene Faktoren einstellen lassen. Zu diesen Faktoren gehören unter anderem die Art der organischen Modifikation, die Kettenlänge und der Verzweigungsgrad des Siloxans sowie die Modifikationsdichte.

Des Weiteren werden die Eigenschaften des Siloxans entscheidend davon beeinflusst, ob es sich um ein kammartig modifiziertes oder ein streng difunktionelles *α*,ω-modifiziertes Siloxan handelt.

Für einige Anwendungen ist der Einsatz von *α*,ω-modifizierten Siloxanen von Vorteil. Dies gilt zum Beispiel für den Einsatz von Siloxanen mit quaternären Ammonium-Funktionen als Weichmacher für Textilien. Hier hat sich gezeigt, dass *α*,ω-modifizierte Siloxane den kammartig modifizierten deutlich überlegen sind (EP-B-0 294 642). Ähnliches trifft auch für den Einsatz von Siliconacrylaten zur Herstellung von adhäsiven Beschichtungen zu (EP-A-0 979 851). In diesen Fällen sind die positiven anwendungstechnischen Eigenschaften auf das Vorhandensein eines langen unmodifizierten linearen Siloxanfragmentes zurückzuführen.

Auch verzweigte Siloxanblockcopolymere zeigen besondere Eigenschaften und werden in verschiedenen Schutzrechten beschrieben (z.B. US-5 136 068, EP-A-381 318). Das Merkmal der beschriebenen Siloxanblockcopolymere ist, dass die Verknüpfung in allen Fällen durch Reaktionen von SiH-Gruppen mit z.B Diolefinen oder 1,3-Divinyltetramethyldisiloxan erhalten wird.

SiH- und SiCl-Gruppen enthaltende Siloxane eignen sich besonders als Ausgangsprodukt für organomodifizierte Siloxane. Die organischen Reste werden über Hydrosilylierungsreaktionen, Addition bzw. dehydrogenative Kupplung an das Siloxangerüst geknüpft.

Für die Darstellung von *α*,ω-modifizierten Siloxanen bedeutet dies, dass sich auf diesen Wegen lediglich zwei organische Reste einführen lassen. In einigen Fällen ist es jedoch wünschenswert, Siloxane herzustellen, die an den Kettenenden einen höheren Modifikationsgrad aufweisen und trotzdem ein unmodifiziertes lineares Siloxanfragment aufweisen.

Ein Gegenstand der vorliegenden Erfindung ist es, derartige Organosiloxane und ein Verfahren zu deren Herstellung bereitzustellen.

Das Wesen dieser Erfindung liegt in der gezielten Verfahrenskombination zum Aufbau von organomodifizierten Siloxanen, die es erlaubt Siloxane herzustellen, die mindestens ein längeres nicht modifiziertes, lineares Siloxanfragment besitzen und deren Kettenenden mehrfach modifiziert sind.

Diese Organopolysiloxane sind zugänglich durch die
A) Anlagerung von Organopolysiloxanen der allgemeinen Formel I 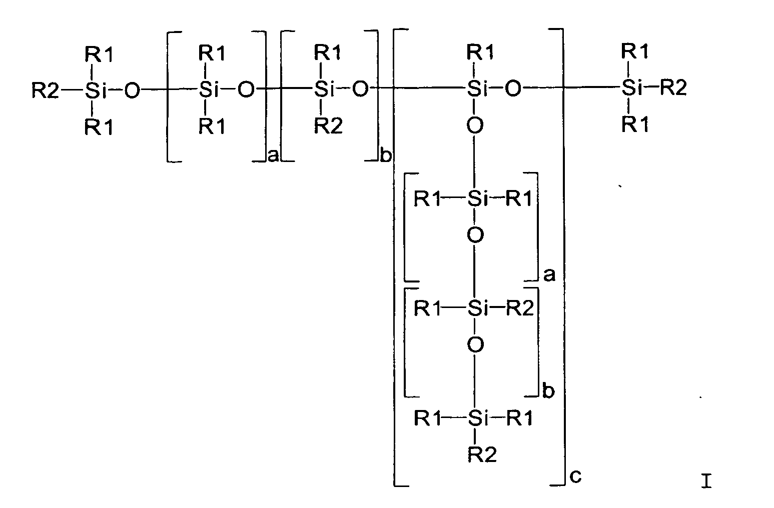 worin bedeuten
   - R¹: gleiche oder verschiedene aliphatische oder aromatische Kohlenwasserstoffreste mit 1 bis 20 C-Atomen,
   - R²: R¹ oder H, mit der Maßgabe, daß mindestens drei Reste R² gleich H sind,
   - a: 5 bis 500,
   - b: 1 bis 50,
   - c: 0 bis 5, bevorzugt 0,
   an Vinylsiloxane der allgemeinen Formel II, 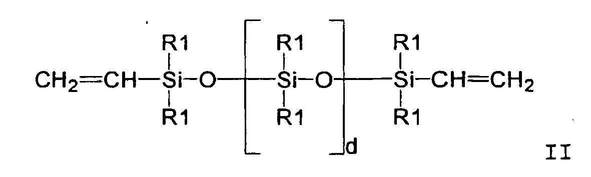 mit
   - d: 10 bis 1.000, insbesondere 30 bis 750, besonders bevorzugt 50 bis 500
   in Gegenwart von Platin- oder Rhodiumkatalysatoren,
   mit der Maßgabe, dass die Organopolysiloxane der allgemeinen Formel I im mindestens 6-fachen molaren Überschuss, bezogen auf das Vinylsiloxan der allgemeinen Formel II, vorliegt,
   und weiterer Umsetzung des Reaktionsproduktes in mindestens einer der Stufen
B) Übergansmetall-katalysierter teilweiser oder vollständiger Addition der SiH-Gruppen an Alkenyl- und/oder Alkinylverbindungen,
C) unter Mitverwendung eines Katalysators teilweiser oder vollständiger Umsetzung der nach obiger Reaktion(en) verbliebenen RSiH-Gruppen mit mindestens einem Alkohol, aus der Gruppe der linearen oder verzweigten, gesättigten, einoder mehrfach ungesättigten, aromatischen, aliphatisch-aromatischen, gegebenenfalls Halogenatome enthaltenden Monoalkohole, Polyethermonoalkohole, Polyestermonoalkohole, Aminoalkohole.

Durch die Maßgabe, dass das SiH-Gruppen tragende Organopolysiloxan der allgemeinen Formel I im mindestens 6-fachen molaren Überschuss, bezogen auf das Vinylsiloxan der allgemeinen Formel II, vorliegt, wird verhindert, dass es zur Ausbildung eines Netzwerkes und zur Entstehung hochviskoser Produkte kommt.

Dies bedingt, dass neben dem erfindungsgemäßen Organosiloxan ein gewisser Anteil eines kammartig modifizierten Siloxans im Produkt vorliegt.

Die erfindunsgemäßen, nach einem der beiden vorgenannten Verfahren hergestellten Organosiloxane besitzen in der Regel Viskositäten bis 10.000 mPas, vorzugsweise unter 5.000 mPas.

Aufgrund der gewählten Reaktionsbedingungen bildet sich aus dem Vinylsiloxan und dem Si-funktionellen Siloxan in der ersten Stufe größtenteils ein Siloxan der folgenden idealisierten "H-Struktur" (c = 0, R¹ = Me, R² = R = Me oder H) :

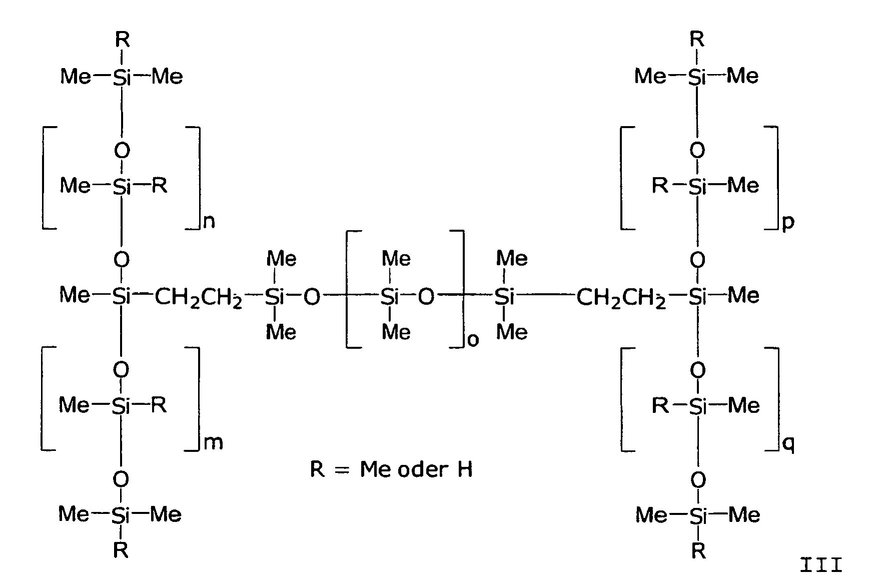

Dieses Siloxangerüst bleibt bei der anschließenden Herstellung der erfindungsgemäßen Siloxane in den folgenden Stufen erhalten.

Es wurde gefunden, dass die Darstellung der erfindungsgemäßen Siloxane lösemittelfrei erfolgen kann. Der Einsatz eines Lösemittels kann jedoch vorteilhaft sein. So kann es zum Beispiel bei der Darstellung der erfindungsgemäßen Siloxane zu einer Schaumbildung kommen, die sich durch den Einsatz von Lösemitteln unterdrücken lässt. Geeignete Lösemittel sind zum Beispiel Toluol und Cyclohexan.

Als wirksame Katalysatoren für den ersten Schritt, der Hydrosilylierung des Vinylsiloxans, können Pt- und Rh-haltige Komplexe eingesetzt werden, die dem Fachmann als hydrosilylierungsaktive Katalysatoren bekannt sind, zum Beispiel:
H₂Cl₆, Pt [(CH₂CH-Si)₂O] ₙ oder Rh (CO) (C₅H₇O₂) .

Für die Anlagerung des Alkohols, an das erhaltene SiH-haltige Siloxan können zum Beispiel Lewissäuren, bevorzugt Bor-haltige Lewissäuren, eingesetzt werden. Eine bevorzugte Ausführungsform der Erfindung besteht darin, dass als borhaltige Verbindung des katalytischen Systems fluorierte und/oder nicht fluorierte Organoborverbindungen eingesetzt werden, insbesondere solche, die ausgewählt sind aus:
(C₅F₄) (C₆F₅) ₂B; (C₅F₄) ₃B; (C₆F₅)BF₂; BF (C₆F₅) ₂; B (C₆F₅) ₃; BCl₂(C₆F₅) *;* BCl(C₆F₅)_{2;} B (C₆H₅) (C₆F₅)₂;B(Ph)₂(C₆F₅) ; [C₆H₄ (mCF₃) ]₃B; [C₆H₄ (pOCF₃) ]₃B; (C₆F₅) B(OH)2; (C₆F₅)₂BOH_{;}(C₆F₅)₂BH_{;} (C₆F₅) BH₂; (C₇H₁₁) B (C₆F₅)₂; (C₈H₁₄B) (C₆F₅) ; (C₆F₅) ₂B (OC₂H₅) (C₆F₅)₂B-CH₂CH₂Si(CH₃) ; 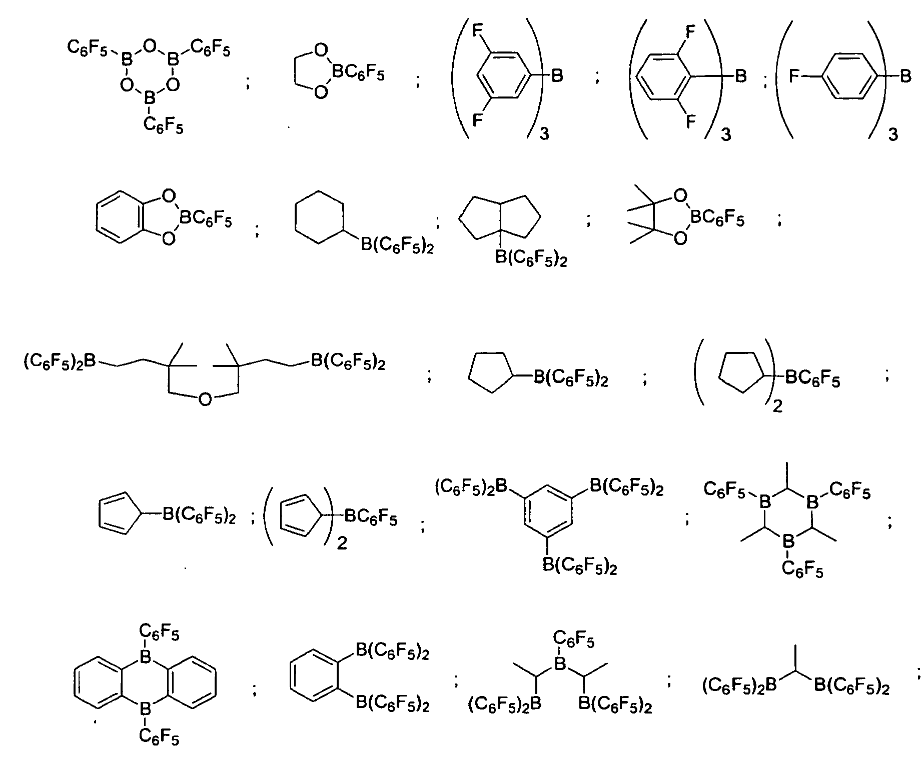 besonders bevorzugt Tris(pentafluortriphenylboran) [CAS-Nr. 1109-15-5], sowie Gemische der vorstehenden Katalysatoren.

Beim Einsatz dieser borhaltigen Katalysatoren können des weiteren synergistisch wirksame Verbindung eingesetzt werden. Dazu zählen Salze oder Komplexe, mit Kationen ausgewählt aus der Gruppe der Salze von Elementen der 4., 6., 7. und 8. Nebengruppe sowie der 4. Hauptgruppe. Als Anionen der synergistisch aktiven Verbindungen des katalytischen Systems können bevorzugt Alkoxylate, Säureanionen, insbesondere Carboxylate, Sulfate, Nitrate oder Phosphate, Halogenide, insbesondere Chloride, Oxide oder Komplexliganden, insbesondere Acetylacetonat oder Carbonyle, verwendet werden.

Ferner wird in der nicht veröffentlichten Patentanmeldung DE 103 12 634.1 ein Verfahren zur Herstellung organisch modifizierter Polyorganosiloxane unter Verwendung einer katalytischen Mischung bestehend aus mindestens einer Säure und mindestens einem Salz einer Säure durch Verknüpfung von Wasserstoffsiloxanen mit Alkoholen beschrieben.

Geeignete Alkohole sind zum Beispiel lineare oder verzweigte, gesättigte, ein- oder mehrfach ungesättigte, aromatische, aliphatisch-aromatische, gegebenenfalls Halogenatome, insbesondere Fluoratome, enthaltende Mono- oder Polyalkohole, Polyethermonoalkohole, Polyetherpolyalkohole, Polyestermonoalkohole, Polyesterpolyalkohole, Aminoalkohole, insbesondere N-Alkyl-, Arylamino-EO-, -PO-Alkohole (EO steht für den Ethylenoxidrest, PO für den i-Propylenoxidrest), N-Alkyl- oder Arylaminoalkohole sowie deren Gemische, (meth)acrylierte Monoalkohole oder Polyalkohole, oder aus einer Mischung derselbigen, oder aus Mischungen der einfach oder mehrfach (meth)acrylierten Monoalkohole oder Polyalkohole.

Als wirksame Katalysatoren für die Übergansmetallkatalysierte Addition der SiH-Gruppen des im ersten Schritt hersgestellten Siloxans an CC-Mehrfachbindungen können die bekannten Hydrosilylierungskatalysatoren verwendet werden, zum Beispiel: H₂Cl₆, Pt[(CH₂CH-Si)₂O]ₙ oder Rh(CO) (C₅H₇O₂) .

Geeignete Alkenyl-/Alkinylverbindungen sind zum Beispiel Ethen, Ethin, Propen, 1-Buten, 1-Hexen, 1-Dodecen, 1-Hexadecen, Allylalkohol, 1-Hexenol, allylfunktionelle Polyether, Styrol, Eugenol, Allylphenol, Undecylensäuremethylester, Vinylcyclohexenoxid, Allylglycidylether.

Die erfindungsgemäßen Polyorganosiloxane sind verwendbar für die Ausrüstung von Textilien oder als abhäsive Trennbeschichtungen, UV-härtende Beschichtungen, Additive für UV-härtende Beschichtungen, Additive für Kunststoffe, Lacke, Druckfarben und für kosmetische Formulierungen oder im Bautenfarbenbereich, Polyurethan-Schaumstabilisatoren und/oder als Entschäumer in nicht wässrigen Medien.

### Herstellung von erfindungsgemäßen Organosiloxanen

### Organosiloxan 1

1a) In einem Dreihalskolben mit Rührer Intensivkühler und Thermometer wurden 248 g eines Siloxans der allgemeinen Summenformel Me₃Si- [SiMe₂O]₂₀- [SiMeHO]₅-SiMe₃ mit 159 g eines Divinylsiloxans der allgemeinen Formel CH₂=CH-SiMe₂- [SiMe₂O]₂₅₀₋SiMe₂-CH=CH₂ gemischt und mit 10 ppm eines Pt-Katalysators versetzt. Die Reaktionsmischung wurde anschließend für zwei Stunden auf 90 °C geheizt.
   Es entstand ein Siloxangemisch mit einer Viskosität von 360 mPas. Die Viskositäten wurden bestimmt mit einem Viskosimeter der Marke: Brookfield LVT (Spindel 3,4 oder 5) nach Angaben des Herstellers.
1b) 44 g Octanol werden in einem Vierhalskolben, ausgestattet mit Rührer, Intensivkühler, Thermometer und Tropftrichter, zusammen mit 0,02 g (200 ppm) Tris(pentafluorphenyl)boran als Katalysator auf 120 °C aufgeheizt. Bei Erreichen der Temperatur werden 215 g des unter 1a) hergestellten Si-H-funktionalisiertes Polydimethylsiloxans innerhalb von 20 Minuten zugetropft. Eine Stunde nach beendeter Zugabe und Abkühlen lag der Umsatz, entsprechend der SiH-Wert Methode bei 0 %.

### Organosiloxan 2

2a) 50 g 1-Octenol werden in einem Vierhalskolben, ausgestattet mit Rührer, Intensivkühler, Thermometer und Tropftrichter, zusammen mit 10 ppm eines Platinkatalysators 70 °C aufgeheizt. Bei Erreichen der Temperatur werden 215 g des unter 1a) hergestellten Si-H-funktionalisiertes Polydimethylsiloxan innerhalb von 30 Minuten zugetropft. Eine Stunde nach beendeter Zugabe und Abkühlen lag der Umsatz, entsprechend der SiH-Wert Methode bei 0 %.

### Organosiloxan 3

3a) 175 g eines Polyethers der allgemeinen Summenformel C₄H₉O[CH₂CH₂O]₇H werden in einem Vierhalskolben, ausgestattet mit Rührer, Intensivkühler, Thermometer und Tropftrichter, zusammen mit 0,04 g Tris(pentafluorphenyl)boran als Katalysator auf 120 °C aufgeheizt. Bei Erreichen der Temperatur werden 215 g des unter 1a) hergestellten Si-H-funktionalisiertes Polydimethylsiloxan innerhalb von 30 Minuten zugetropft. Eine Stunde nach beendeter Zugabe und Abkühlen lag der Umsatz, entsprechend der SiH-Wert Methode bei 0 %.

### Anwendungstechnische Beispiele:

### Beispiel 1:

### Entschäumung von Kraftstoffen

Das erfindungsgemäße Siloxan 2a) wurde auf seine entschäumende Wirkung in Dieselkraftstoff geprüft. Dazu wurde das Siloxan in einem Additivpaket des Standes der Technik gelöst und eine bestimmte Menge dieser Mischung in 1.500 g additivfreien Dieselkraftstoff eingerührt. Die Menge des Siloxans wird so gewählt, dass die gewünschte Siloxankonzentration zwischen 8 und 15 ppm variiert.

Die Ergebnisse sind in Tabelle 1 aufgeführt.

| Entschäumer | Einsatzkonzentration (ppm) | Schaumhöhe (mL) trocken | Schaumzerfallszeit (sek) |
|---|---|---|---|
| Blindwert | -- | 110 | 20 |
| 2a | 8 | 40 | 15 |
| 2a | 15 | 25 | 10 |

## Patentansprüche

1. Organopolysiloxane, erhalten durch
A) Anlagerung von Organopolysiloxanen der allgemeinen Formel I 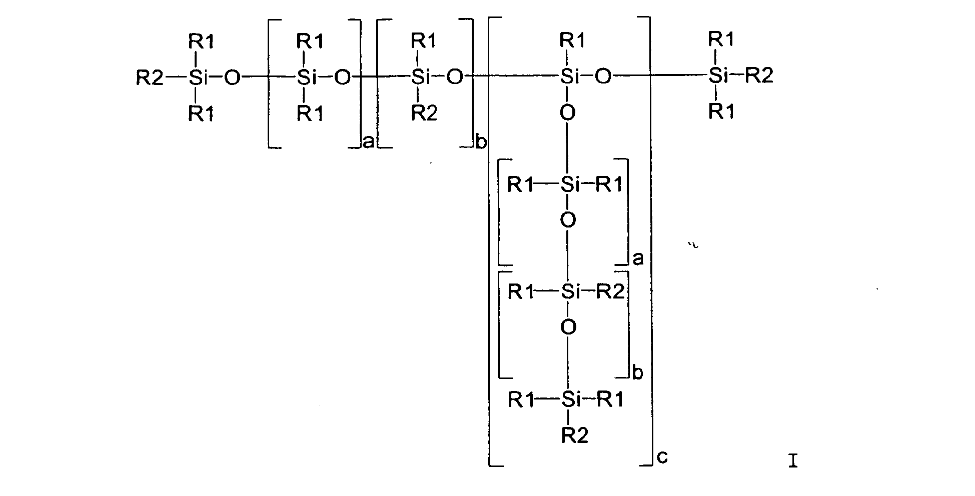 worin bedeuten
R¹ gleiche oder verschiedene aliphatische oder aromatische Kohlenwasserstoffreste mit 1 bis 20 C-Atomen,
R² R¹ oder H, mit der Maßgabe, dass mindestens drei Reste R² gleich H sind,
a 5 bis 500,
b 1 bis 50,
c 0 bis 5, bevorzugt 0,
an Vinylsiloxane der allgemeinen Formel II, 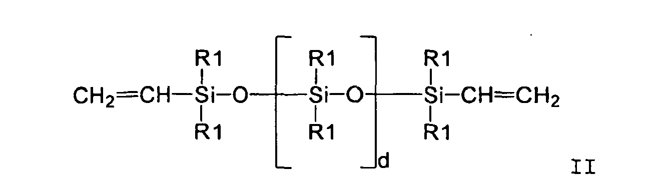 mit
d 10 bis 1.000,
in Gegenwart von Platin- oder Rhodiumkatalysatoren,
mit der Maßgabe, dass die Organopolysiloxane der allgemeinen Formel I im mindestens 6-fachen molaren Überschuss, bezogen auf das Vinylsiloxan der allgemeinen Formel II, vorliegt,
und weiterer Umsetzung des Reaktionsproduktes in mindestens einer der Stufen
B) Übergansmetall-katalysierter teilweiser oder vollständiger Addition der SiH-Gruppen an Alkenyl- und/oder Alkinylverbindungen,
C) unter Mitverwendung eines Katalysators teilweiser oder vollständiger Umsetzung der nach obiger Reaktion(en) verbliebenen RSiH-Gruppen mit mindestens einem Alkohol, aus der Gruppe der linearen oder verzweigten, gesättigten, ein- oder mehrfach ungesättigten, aromatischen, aliphatisch-aromatischen, gegebenenfalls Halogenatome enthaltenden Monoalkohole, Polyethermonoalkohole, Polyestermonoalkohole, Aminoalkohole.

2. Organopolysiloxane, nach Anspruch 1, **dadurch gekennzeichent, das** R¹ eine Methylgruppe ist.

3. Organopolysiloxane, nach Anspruch 1 und 2, **dadurch gekennzeichnet, dass** als Katalysator für die Anlagerung des Alkohols an das erhaltene SiH-haltige Siloxan borhaltige Lewissäuren eingesetzt werden.

4. Organopolysiloxane, nach Anspruch 3, **dadurch gekennzeichnet, dass** als borhaltige Lewissäure Tris(pentafluortriphenylboran) (C₅F₄)₃B eingesetzt wird.

5. Organopolysiloxane, nach Anspruch 3 oder 4, **dadurch gekennzeichnet, dass** für die Anlagerung des Alkohols, neben borhaltigen Lewissäuren, eine synergistisch wirksame Verbindung eingesetzt wird.

6. Organopolysiloxane, nach Anspruch 5, **dadurch gekennzeichnet, dass** als synergistisch wirksame Verbindung ein Salz oder Komplexe, mit Kationen ausgewählt aus der Gruppe der Salze von Elementen der 4., 6., 7. und 8. Nebengruppe sowie der 4. Hauptgruppe eingesetz wird.

7. Organopolysiloxane, nach Anspruch 1 und 2, **dadurch gekennzeichnet, dass** als Katalysator für die Anlagerung des Alkohols an das erhaltene SiH-haltige Siloxan eine katalytische Mischung bestehend aus mindestens einer Carbonsäure und mindestens einem Salz einer Carbonsäure mitverwendet wird.

8. Organopolysiloxane, nach Anspruch 1 bis 7, **dadurch gekennzeichnet, dass** die Viskosität < 10.000 mPas ist.

9. Verwendung der Organosiloxane nach Anspruch 1 bis 8 zur Entschäumung von nicht wässrigen Systemen.

10. Verwendung der Organosiloxane nach Anspruch 1 bis 8 zur Ausrüstung von Textilien, als abhäsive Trennbeschichtungen, UV-härtende Beschichtungen, als Additive für UV-härtende Beschichtungen, als Additive für Kunststoffe, Lacke, Druckfarben und für kosmetische Formulierungen oder im Bautenfarbenbereich, als Polyurethan-Schaumstabilisatoren.

## Claims

1. Organopolysiloxanes obtained by
A) addition reaction of organopolysiloxanes of the general formula I 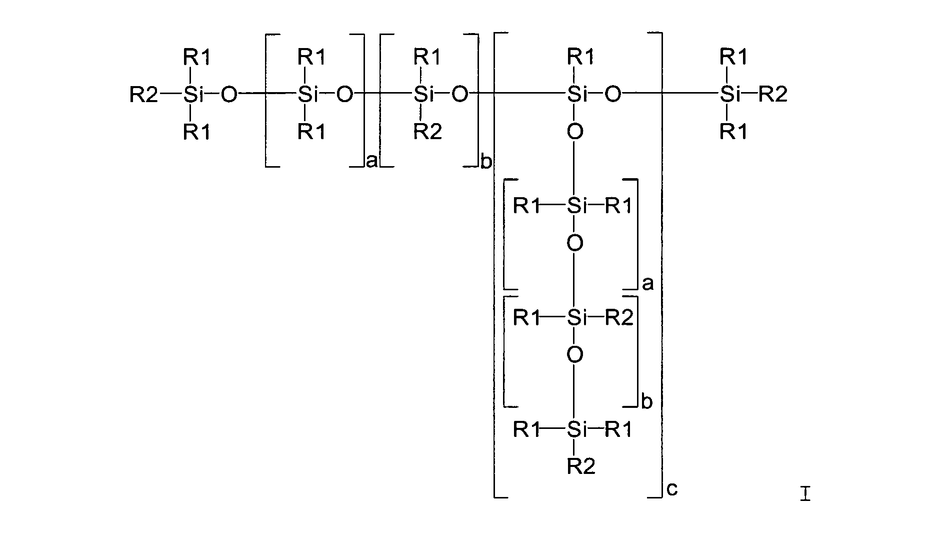 in which
R¹ denotes identical or different aliphatic or aromatic hydrocarbon radicals having 1 to 20 carbon atoms,
R² denotes R¹ or H, with the proviso that at least three radicals R² are H,
a is 5 to 500,
b is 1 to 50,
c is 0 to 5, preferably 0,
with vinylsiloxanes of the general formula II, 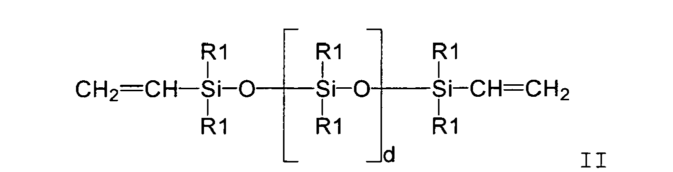 where
d is 10 to 1000,
in the presence of platinum catalysts or rhodium catalysts,
with the proviso that the organopolysiloxanes of the general formula I are present in a molar excess of at least 6 times, relative to the vinylsiloxane of the general formula II,
and further reaction of the reaction product in at least one of the following stages:
B) transition metal-catalyzed partial or complete addition reaction of the SiH groups with alkenyl and/or alkynyl compounds,
C) with the use of a catalyst, partial or complete reaction of the RSiH groups, remaining after above reaction(s), with at least one alcohol from the group of linear or branched, saturated, mono- or polyunsaturated, aromatic, aliphatic-aromatic, optionally halogen atom-containing monoalcohols, polyether monoalcohols, polyester monoalcohols, and amino alcohols.

2. Organopolysiloxanes according to Claim 1, **characterized in that** R¹ is a methyl group.

3. Organopolysiloxanes according to Claim 1 or 2, **characterized in that** boron-containing Lewis acids are used as catalyst for the addition reaction of the alcohol with the resultant SiH-containing siloxane.

4. Organopolysiloxanes according to Claim 3, **characterized in that** tris(pentafluorotriphenylborane) (C₅F₄)₃B is used as boron-containing Lewis acid.

5. Organopolysiloxanes according to Claim 3 or 4, **characterized in that** a synergistic compound is used for the addition reaction of the alcohol, as well as boron-containing Lewis acids.

6. Organopolysiloxanes according to Claim 5, **characterized in that** said synergistic compound is a salt or complex with cations selected from the group of the salts of elements of transition groups 4, 6, 7, and 8 and also of main group 4.

7. Organopolysiloxanes according to Claim 1 or 2, **characterized in that** a catalytic mixture composed of at least one carboxylic acid and at least one salt of a carboxylic acid is used additionally as catalyst for the addition reaction of the alcohol with the resultant SiH-containing siloxane.

8. Organopolysiloxanes according to any one of Claims 1 to 7, **characterized in that** the viscosity is < 10 000 mPas.

9. Use of the organosiloxanes according to any one of Claims 1 to 8 for defoaming non-aqueous systems.

10. Use of the organosiloxanes according to any one of Claims 1 to 8 for finishing textiles, as abhesive release coatings, UV-curing coatings, as additives for UV-curing coatings, as additives for plastics, paints, printing inks and for cosmetic formulations or in the architectural paint sector, or as polyurethane foam stabilizers.

## Revendications

1. Organopolysiloxanes, obtenus par
A) fixation par addition d'organopolysiloxanes de formule générale I 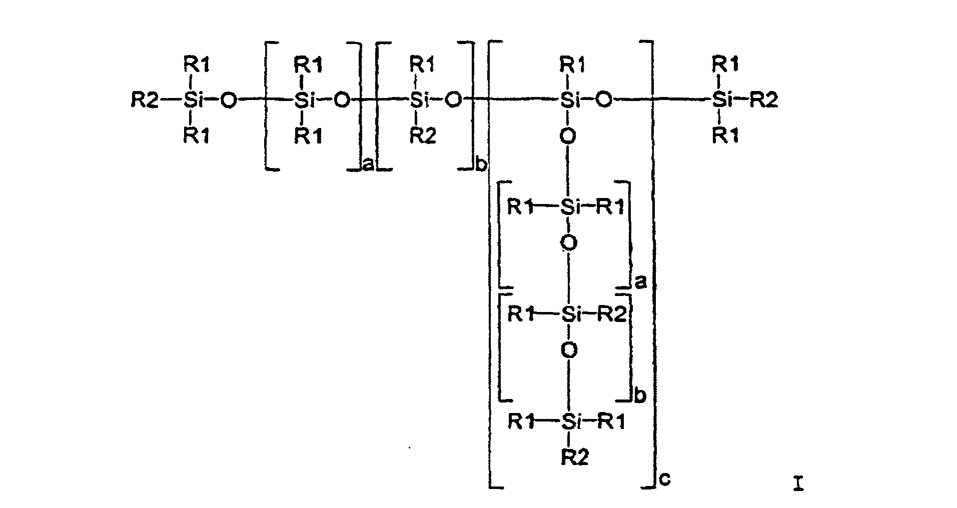 dans laquelle
R¹ représentent des radicaux hydrocarbonés aliphatiques ou aromatiques, identiques ou différents, ayant de 1 à 20 atomes de carbone,
R² représentent R¹ ou H, étant entendu qu'au moins trois radicaux R² représentent H,
a va de 5 à 500,
b va de 1 à 50,
c va de 0 à 5, de préférence est 0,
sur des vinylsiloxanes de formule générale II, 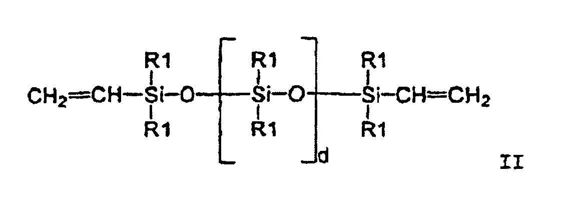 où
d va de 10 à 1 000,
en présence de catalyseurs au platine ou au rhodium,
étant entendu que les organopolysiloxanes de formule générale I sont présents en un excès molaire d'au moins 6:1, par rapport au vinylsiloxane de formule générale II,
et de nouveau mise en réaction du produit de réaction dans au moins l'une des étapes
B) addition partielle ou totale, catalysée par un métal de transition, des groupes SiH sur des groupes alcényle et/ou alcynyle,
C) mise en réaction partielle ou totale, avec utilisation simultanée d'un catalyseur, des groupes RSiH qui restent après la/les réaction(s) ci-dessus, avec au moins un alcool choisi dans le groupe des monoalcools, polyéther-monoalcools, polyester-monoalcools, aminoalcools, linéaires ou ramifiés, saturés, une ou plusieurs fois insaturés, aromatiques, aliphatiques-aromatiques, contenant éventuellement des atomes d'halogène.

2. Organopolysiloxanes selon la revendication 1, **caractérisés en ce que** R¹ est un groupe méthyle.

3. Organopolysiloxanes selon les revendications 1 et 2, **caractérisés en ce qu'**on utilise des acides de Lewis contenant du bore en tant que catalyseur pour la fixation par addition de l'alcool sur le siloxane obtenu, contenant SiH.

4. Organopolysiloxanes selon la revendication 3, **caractérisés en ce qu'**on utilise comme acide de Lewis contenant du bore le tris(pentafluorotriphénylborane) (C₅F₄)₃B.

5. Organopolysiloxanes selon la revendication 3 ou 4, **caractérisés en ce que** pour la fixation par addition de l'alcool on utilise, outre des acides de Lewis contenant du bore, un composé à effet synergique.

6. Organopolysiloxanes selon la revendication 5, **caractérisés en ce qu'**on utilise en tant que composé à effet synergique un sel ou des complexes avec des cations choisis dans l'ensemble des sels des éléments des groupes 4B, 6B, 7B et 8B ainsi que du groupe 4A du système périodique.

7. Organopolysiloxanes selon les revendications 1 et 2, **caractérisés en ce que** pour la fixation par addition de l'alcool sur le siloxane obtenu, contenant SiH, on utilise en même temps comme catalyseur un mélange catalytique constitué d'au moins un acide carboxylique et d'au moins un sel d'un acide carboxylique.

8. Organopolysiloxanes selon l'une quelconque des revendications 1 à 7, **caractérisés en ce que** la viscosité est < 10 000 mPa.s.

9. Utilisation des organosiloxanes selon l'une quelconque des revendications 1 à 8, pour le démoussage de systèmes non aqueux.

10. Utilisation des organosiloxanes selon l'une quelconque des revendications 1 à 8, pour l'apprêtage de textiles, en tant que revêtements séparateurs antiadhésifs, revêtements durcissant aux UV, en tant qu'additifs pour des revêtements durcissant aux UV, en tant qu'additifs pour matières plastiques, peintures, encres d'imprimerie et pour des compositions cosmétiques ou dans le secteur des peintures pour le bâtiment, en tant que stabilisants de mousses de polyuréthanne.
